Europäisches Patentamt

European Patent Office

Office européen des brevets

(11) Veröffentlichungsnummer: **0 011 300**
**A1**

(12) **EUROPÄISCHE PATENTANMELDUNG**

(21) Anmeldenummer: 79104533.9

(22) Anmeldetag: 16.11.79

(51) Int. Cl.³: **F 16 J 1/14**

(30) Priorität: 18.11.78 DE 2850126

(43) Veröffentlichungstag der Anmeldung:
28.05.80 Patentblatt 80/11

(84) Benannte Vertragsstaaten:
CH FR GB IT NL SE

(71) Anmelder: Boge Kompressoren Otto Boge GmbH & Co.
KG
Meller Strasse 2
D-4800 Bielefeld 1(DE)

(72) Erfinder: Kuhn, Wolfgang, Ing. grad.
Astastrasse 25
D-4800 Bielefeld 13(DE)

(74) Vertreter: Hoefer, Theodor, Dipl.-Ing. et al,
Kreuzstrasse 32
D-4800 Bielefeld(DE)

(54) Kolben für Kolbenmaschinen wie Kolbenverdichter, Brennkraftmaschinen od. dgl.

(57) Bei einem Kolben für Kolbenmaschinen ist der Kolbenboden (1) mit einem zentrisch angeordneten röhrenförmigen Innenteil (2) mit sich gegenüberliegenden Lageraufnahmen (3) für den Kolbenbolzen (4) einer Kolbenstange ausgestattet. Dabei sind der Kolbenboden (1) und das röhrenförmige Innenteil (2) aus einem Werkstück gebildet. Vorzugsweise ist das zylinderförmig ausgebildete Innenteil (2) gegenüber dem Kolbenschaft (5) kürzer als dieser ausgebildet und verläuft im Abstand von diesem mit einem wesentlich geringeren Durchmesser.

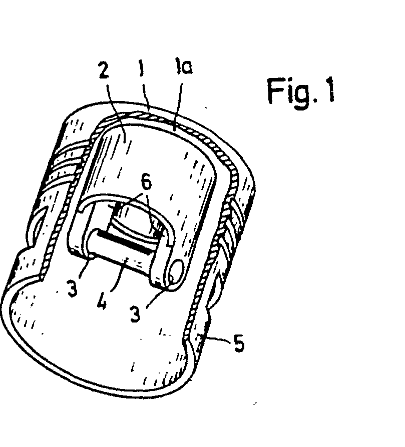

Fig. 1

Patentanwalt

**Dipl.-Ing. Th. Hoefer**                    6/3

4800 Bielefeld 1, den
Kreuzstraße 32
Telefon (05 21) 17 10 72 · Telex 9-32 449

Bankkonten  Commerzbank AG Bielefeld 6 851 471 (BLZ 480 400 35)
Sparkasse Bielefeld 72 001 563 (BLZ 480 501 61)
Postscheckkonto: Amt Hannover 689 28-304

Zugelassener Vertreter beim Europäischen Patentamt
Prof  Representative before the European Patent Office
Mandataire agréé près l'Office europeen des brevets

0011300

diess.Akt.Z.: E 7

Firma Boge Kompressoren Otto Boge GmbH & Co. KG,
Meller Straße 2, 4800 Bielefeld 1

---

Kolben für Kolbenmaschinen wie Kolbenverdichter,
Brennkraftmaschinen od. dgl.

---

Die Erfindung bezieht sich auf einen Kolben, bestehend
aus einem Kolbenboden und einem Kolbenschaft, für
oszillierende Kolbenmaschinen wie Kolbenverdichter,
Brennkraftmaschinen od. dgl.

Kolben für Kolbenverdichter und Brennkraftmaschinen müssen
bekanntlich unter Aufwendung peinlichster Sorgfalt im Hin-

-2-

blick einer großen Genauigkeit an ihrer Lauffläche hergestellt werden. Insbesondere ist bei der Durchbildung des Kolbenschaftes zu berücksichtigen, daß der Kolbenschaft an seiner tragenden Fläche sich während des Betriebes durch die Einwirkung der Verdichtungs- und Verbrennungswärme und unter dem Einfluß der aufzunehmenden, insbesondere dynamischen Kräfte stark verformt. Je größer die thermische Belastung als solche ist, desto stärker werden die Verformungen.

Die zum Stande der Technik zählenden Kolben sind mit einer kolbenschaftseitigen Aufnahme für den Kolbenbolzen der Kolbenstange ausgestattet, wobei diese, auf der Innenfläche des Kolbenschaftes liegende Aufnahme als Masse in den Kolbenschaft einbezogen ist.

In der Praxis hat es sich nun herausgestellt, daß Kolben mit einem am Kolbenschaft gelagerten Kolbenbolzen in Bezug auf den Kolbenschaft in sogenannten Ovalformen zweckmäßig sind. Derartige Ovalformen sind die Folge davon, daß bei einer derartigen Lagerung des Kolbenbolzens eine gleichmäßige radiale Wärmedehnung des Schaftes nicht gegeben ist. Bei einem Kolben mit kolbenschaftseitiger Aufnahme und Halterung des Kolbenbolzens bilden sich im eingebauten und noch nicht betriebswarmen Zustand zwischen der Zylinderwandung und den Kolbenschaft Freiräume in Sichelform. Solche Sichelräume bringen ein vergrößertes Kolbenspiel mit sich und heben sich erst bei einem betriebswarmen Kolben durch eine kreisrunde Querschnittsform auf. Durch ein derart vergrößertes Kolbenspiel wird aber mehr

Schmierstoff verbraucht. Bei überhitztem Kolben kehrt
sich dieses Verhalten um, das Spiel hebt sich auf und
es entstehen Kolbenfresser.

Von diesem vorbenannten Stande der Technik und den anhaftenden Mängeln ausgehend, liegt die Aufgabe der Erfindung darin, einen Kolben mit einer Kolbenbolzenlagerung zu schaffen, bei welchem eine gleichmäßige radiale
Wärmedehnung gewährleistet ist und demzufolge die aufgezeigten Ovalverformungen vermieden werden.

Die gestellte Aufgabe wird dadurch gelöst, daß der Kolbenboden auf seiner Innenfläche ein zentrisch angeordnetes,
röhrenförmiges Innenteil mit sich gegenüberliegenden
Lageraufnahmen für den Kolbenbolzen aufweist, wobei der
Kolbenboden und das röhrenförmige Innenteil eine einstückige Einheit bilden.

Der Kolben mit einer Kolbenbolzenlagerung in dem erfindungsgemäßen Innenteil zeigt, im Gegensatz zum Bekannten, nur eine relativ geringe Neigung zum Festklemmen oder Festfressen, da bei einer solchen Lagerung
eine gleichmäßig radiale Verringerung des Kolbenspiels
bei steigender Betriebstemperatur einer kolbenschaftseitigen Lagerung gegeben ist. Da beim erfindungsgemäßen
Gegenstand keinerlei Ovalverformungen auftreten, kann
hier von einem anpassungsfähigen Kolbenschaft gesprochen
werden.

Weitere Vorteile liegen darin, daß die Wandung des Kolbenschaftes dünner ausgebildet sein kann wie bisher, da an dem Kolbenschaft angegossene Kolbenbolzenhalterungen nunmehr entfallen. Auch läßt sich der Kolbenbolzen jetzt wesentlich kürzer und dünner ausbilden, da derselbe nur noch dem Außendurchmesser des mit dem Kolbenkopf verbundenen Innenteils entsprechen muß und die Durchbiegung verringert wird. Insgesamt gesehen stellen sich somit wahrnehmbare Gewichtseinsparungen ein.

Der Kolben mit der vorbeschriebenen Kolbenbolzenlagerung zeigt eine gleichmäßige radiale Wärmedehnung im Bereich des Kolbenschaftes und infolge der dadurch vermiedenen Ovalverformungen stellt sich ein geringerer Ölverbrauch ein.

Die Lageraufnahmen für den Kolbenbolzen sind vorzugsweise in Form von Kolbenbolzenlageraugen ausgebildet und befinden sich in dem freien Ende des Innenteiles. Erfindungsgemäß kann das Innenteil an seinem freien Ende auch angeformte Lappen od.dgl. aufweisen, wobei die Kolbenbolzenaugen in diesen Lappen angeordnet sind.

Das rohrförmige Innenteil, welches mit dem Kolbenboden aus einem einzigen Werkstück gefertigt ist, ist vorzugsweise zylindrisch gehalten und weist gegenüber dem Kolbenschaft einen wesentlich geringeren Durchmesser auf.

Gegenüber dem Kolbenschaft kann das Innenteil in bevorzugter Weise in Bezug auf die Längenabmessung kürzer ausgebildet sein.

- 5 -

Auch ist ein bevorzugtes Merkmal der Erfindung darin zu
erblicken, daß das Innenteil als Bestandteil des Kolbenbodens im Bereich der in Form von Kolgenbolzenaugen
ausgebildeten Lageraufnahmen innenliegende Verstärkungen
aufweist, die der Auflage des Kolbenbolzens dienen.

- 6 -

Die nachstehende Beschreibung dient der Erläuterung des
Gegenstandes der Erfindung, von dem ein Ausführungsbeispiel in der Zeichnung dargestellt ist. Gewisse Variationen
in Bezug auf das mit dem Kolbenboden eine einstückige Einheit bildende Innenteil sind gegeben, ohne daß der Erfindungsrahmen dabei verlassen wird. Demzufolge wird auch
nicht nur ein Schutz für die Merkmale der einzelnen Ansprüche beantragt, sondern auch auf deren Kombination.

Es zeigen als Ausführungsbeispiel:

Fig. 1     eine perspektivische Ansicht eines
           erfindungsgemäßen Kolbens mit teilweisem Schnitt;

Fig. 2     einen Querschnitt durch denselben
           Kolben entsprechend Fig. 1.

Die Zeichnungen veranschaulichen einen Kolben für Kolbenverdichter und Brennkraftmaschinen.

Zur besseren Darstellung der Kolbenbolzenlagerung ist hierbei der Kolben zum Teil aufgeschnitten. Der Kolben als
solcher besteht in bekannter Weise aus einem Kolbenboden 1
und einem Kolbenschaft 5. Da es sich beim Kolbenboden 1 und
Kolbenschaft 5 um Bekanntes handelt, braucht auf deren Ausbildung im einzelnen nicht näher eingegangen werden. Das
wesentliche Merkmal beim erfindungsgemäßen Gegenstand liegt
in der Kolbenbolzenlagerung als solche. Um nun von der Lagerung am Kolbenschaft 5 freizukommen8 ist auf der Innenfläche

ia des Kolbenkopfes bildet ein rohrförmiges, im Querschnitt kreisförmiges Innenteil 2 angeordnet. Dieses Innenteil 2 bildet mit dem Kolbenboden 1 eine einstückige Einheit, d.h., Kolbenboden 1 und Innenteil 2 sind aus einem Werkstück. Das Innenteil 2 ist zylindrisch gehalten und besitzt die Lageraufnahmen 3 für den Kolbenboden 4 einer, nicht dargestellten, Kolbenstange. Die Lageraufnahmen 3 liegen in dem freien Bereich des Innenteiles 2 und sind in Form von Kolbenbolzenaugen ausgebildet. Es besteht aber auch die Möglichkeit, daß das Innenteil 2, als Bestandteil des Kolbenbodens 1, keine eingearbeiteten Lageraufnahmen 3 für den Kolbenbolzen 4 aufweist, sondern, daß das zylindrische Innenteil 2 an seinem dem Kolbenboden 1 abgewandten Ende lappenartige Anformungen od. dgl. aufweist. In diesem Fall können dann die im Ausführungsbeispiel gezeigten Lageraufnahmen 3 für den Kolbenbolzen 4 in diesen Anformungen angeordnet sein.

Das zylindrische Innenteil 2 bzw. die angeformten Lappen weisen in dem Bereich der Lageraufnahmen 3 innenliegende Verstärkungen 6 auf, wobei diese Verstärkungen 6 als Auflage für den Kolbenbolzen 4 dienen.

Durch die Lagerung des Kolbenbolzens 4 in dem erfindungsgemäßen Innenteil 2 als Bestandteil des Kolbenbodens 1 kann von einer kolbenbodenseitigen Lagerung des Kolbenbolzens 4 gesprochen werden, bei der eine Ovalverformung im Kolbenschaft 5 nicht gegeben ist. Das Innenteil 2 ist über den Kolbenboden 1 indirekt mit dem Kolbenschaft 5 verbunden. Durch die erfindungsgemäße Lagerung des Kolbenbolzens 4 stellt sich eine Verringerung der freien Massenkräfte ein

desweiteren ist auch eine Verringerung hinsichtlich der
Ausgleichsmasse des Kurbeltriebes gegeben.

Das einstückige Werkstück, welches den Kolbenboden 1,
das zylindrische Innenteil 2 und den Kolbenschaft 5 beinhaltet, kann im Spritzgußverfahren oder ähnlichem hergestellt sein.

Der erfindungsgemäße Gegenstand wird allen Anforderungen
gerecht, die an einen Kolben für Kolbenverdichter und
Brennkraftmaschinen gestellt werden und zeichnet sich
darüber hinaus durch seine ralativ einfache Fertigstellung aus.

- 9 -

Patentansprüche
_____

1. Kolben, bestehend aus einem Kolbenboden und einem Kolbenschaft, für Kolbenmaschinen wie Kolbenverdichter, Brennkraftmaschinen, dadurch gekennzeichnet, daß der Kolbenboden (1) auf seiner Innenfläche (1a) ein zentrisch angeordnetes, röhrenförmiges Innenteil (2) mit sich gegenüberliegenden Lageraufnahmen (3) für den Kolbenbolzen (4) einer Kolbenstange aufweist, wobei der Kolbenboden (1) und das röhrenförmige Innenteil (2) eine einstückige Einheit bilden.

2. Kolben nach Anspruch 1, dadurch gekennzeichnet, daß die Lageraufnahmen (3) für den Kolbenbolzen (4) in Form von Kolbenbolzenaugen ausgebildet und im freien Teil des Innenteils (2) angeordnet sind.

3. Kolben nach Anspruch 1, dadurch gekennzeichnet, daß das mit dem Kolbenboden (1) eine Einheit bildende Innenteil (2) an seinem freien Ende angeformte Lappen od. dgl. aufweist, wobei in diesen Lappen die als Kolbenbolzenaugen augebildeten Lageraufnahmen (3) für den Kolbenbolzen (4) zugeordnet sind.

4. Kolben nach den Ansprüchen 1 bis 3, dadurch gekennzeichnet, daß das mit dem Kolbenboden (2) aus einem Werkstück gefertigte Innenteil (2) zylindrisch ausgebildet im Abstand zu dem Kolbenschaft (3) verläuft und gegenüber demselben (5) einen wesentlich geringeren Durchmesser aufweist.

5. Kolben nach den Ansprüchen 1 bis 4, dadurch gekennzeichnet, daß das rohrförmige und zylindrische Innenteil (2) gegenüber dem Kolbenschaft (5) in Bezug auf die Längenabmessung kürzer ausgebildet ist.

6. Kolben nach den Ansprüchen 1 bis 5, dadurch gekennzeichnet, daß das Innenteil (2) bzw. die an demselben (2) angeformten Lappen od. dgl. im Bereich der Lageraufnahmen (3) innenliegende Verstärkungen (6), die der Auflage des Kolbenbolzens (4) dienen, aufweist/ aufweisen.

**0011300**
Nummer der Anmeldung

**EP 79 10 4533**

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 315 005 (CUMMINS) <br> ✗ Seite 2, Zeile 20 bis Seite 7, Zeile 24; Figuren 1-10 ✗ <br> -- | 1-4 |
| X | US - A - 3 703 848 (BROWN 4th) <br> ✗ Figur 2 ✗ <br> -- | 1,2,4,5 |
| | DE - A - 1 775 655 (FOTIADI) <br> ✗ Seite 4, Zeile 1 bis Seite 8, Zeile 3; Figuren 1-4 ✗ <br> -- | 1,4,5 |
| | DE - A - 1 526 570 (F.F.S.A.) <br> ✗ Seite 5, Absatz 3 bis Seite 6, Absatz 3; Figuren 6,7 ✗ <br> -- | 1,2,6 |
| | FR - A - 675 008 (BLUHM) <br> ✗ Seite 1, Zeilen 41-51; Figuren 1-4 ✗ <br> -- | 1,3-6 |
| | GB - A - 1 151 167 (McCULLOCH) <br> ✗ Seite 4, Zeilen 93-119; Figuren 1-4 ✗ <br> -- | 1,3 |
| | FR - A - 686 883 (BOLLEE) <br> ✗ Seite 2, Zeilen 10-96; Figuren 1-3 ✗ <br> -- -- -- | 1 |

**KLASSIFIKATION DER ANMELDUNG (Int.Cl.³)**

F 16 J 1/14

**RECHERCHIERTE SACHGEBIETE (Int.Cl.³)**

F 16 J 1/00
F 02 B 75/00
F 04 B 39/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-02-1980 | LEGER |